Europäisches Patentamt

European Patent Office

Office européen des brevets

(19)

(11) Publication number: **0 380 180**
**A2**

## (12) EUROPEAN PATENT APPLICATION

(21) Application number: **90200163.5**

(22) Date of filing: **22.01.90**

(51) Int. Cl.⁵: **C01B 33/34, B01J 29/04, C10G 45/64**

(30) Priority: **25.01.89 GB 8901578**

(43) Date of publication of application:
**01.08.90 Bulletin 90/31**

(84) Designated Contracting States:
**AT BE CH DE DK ES FR GB GR IT LI LU NL SE**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **Klazinga, Aan Hendrik
Badhuisweg 3
NL-1031 CM Amsterdam(NL)**
Inventor: **Seelen Kruijssen, Josepha Maria
Elisabeth
Badhuisweg 3
NL-1031 CM Amsterdam(NL)**
Inventor: **Minderhoud, Johannes Kornelis
Badhuisweg 3
NL-1031 CM Amsterdam(NL)**

(74) Representative: **Aalbers, Onno et al
P.O. Box 302
NL-2501 CH The Hague(NL)**

(54) **The preparation of composite crystalline silicates.**

(57) A composite crystalline iron- and/or gallium-containing silicate is prepared by maintaining an aqueous starting material comprising one or more iron and/or gallium compounds, one or more silicon compounds and a diaminoalkane at an elevated temperature until the composite silicate is formed and separating the silicate from the mother liquor.

EP 0 380 180 A2

## THE PREPARATION OF COMPOSITE CRYSTALLINE SILICATES

The invention relates to a process for the preparation of composite crystalline silicates and to novel composite crystalline silicates obtainable by that process. In particular the invention relates to crystalline silicates comprising iron or gallium in the crystal lattice.

It is known to prepare crystalline silicates having a zeolite type structure but in which the aluminium ions present in the crystal lattice have been at least in part replaced by other metal ions. Thus EP-A-107875 discloses the use of crystalline gallium silicates and iron silicates as catalysts for the conversion of $C_{2-4}$ paraffinic feedstocks in the preparation of high octane gasolines. It has also been reported by Sivasanker et al (Proc. 9th Int. Congr. Catal. 1988, Calgary, vol. 1, p. 120) that the substitution of aluminium by iron in the lattice framework of certain zeolites such as ZSM-5 gives components which, after incorporation of hydrogenating metals, give catalysts suitable for catalytic dewaxing with reduced gas make and increased gasoline selectivity when compared with the unsubstituted aluminosilicate.

There is therefore considerable interest in the introduction of iron and gallium into crystalline silicates. In the above-mentioned documents, the gallium and iron silicates are prepared from solutions containing a quaternary ammonium compound such as tetrapropyl ammonium hydroxide.

While it is known from US 4,107,195 that a template of butanediamine can be employed in the synthesis of a crystalline aluminosilicate of the specific structure demonstrated by ZSM-35, in the preparation of crystalline zeolites having a structure of the type demonstrated by ZSM-5, it is conventional to use a quaternary ammonium compound such as tetrapropyl ammonium hydroxide - see US 3,700,585.

European patent specifications Nos. 100115 and 178699 describe the preparation of certain composite crystalline aluminium silicates which exhibit the presence of two differing crystalline aluminium silicates. These composite silicates find application as catalysts or catalyst carriers in the catalytic dewaxing of hydrocarbon oils and as molecular sieves in the separation of branched and unbranched and/or cyclic structures in oil processing technology. These composite structures are prepared in the presence of both a quaternary ammonium compound and a pyridine. However, the use of such methods in the preparation of analogous composite gallium and iron silicates with at least part of the lattice aluminium replaced by iron or gallium proved unsuccessful.

Surprisingly, it has been found that composite crystalline gallium or iron containing silicates can be prepared in the presence of a single organic template.

Therefore, in accordance with this invention there is provided a process of preparing a composite crystalline iron- and/or gallium-containing silicate comprising maintaining an aqueous starting material comprising one or more silicon compounds, one or more iron and/or gallium compounds, optionally one or more aluminium compounds, and a diaminoalkane at an elevated temperature until said composite crystalline silicate has formed and subsequently separating the said silicate from the mother liquor.

The diaminoalkane preferably has 2 to 6 carbon atoms and is preferably 1,4-diaminobutane.

The amount of diamine employed can vary considerably, for example within a molar ratio $SiO_2$:diamine of from 0.5 to 50 moles $SiO_2$ per mole of diamine, preferably from 1 to 10 moles $SiO_2$ per mole of diamine.

The gallium- and/or iron-containing compounds are suitable provided as salts such as gallium nitrate or sulphate and iron(III) nitrate or sulphate. The gallium and/or iron is suitably present in a molar ratio $SiO_2$:$M_2O_3$ (where M is iron(III) and/or gallium and, if present, aluminium) of from 10 to 200 moles $SiO_2$ per mole $M_2O_3$, preferably from 25 to 150 moles $SiO_2$ per mole $M_2O_3$.

In the starting mixture used in the process according to the present invention various silicon, and optionally aluminium, compounds may be present. Suitable silicon compounds include water-glass and amorphous silica gel and silica sols, while suitable aluminium compounds include aluminium nitrate, aluminium sulphate and sodium aluminate. It is not necessary, however, that the above-mentioned compounds are added to the aqueous starting mixture in that form. They may also be formed from other reaction components, for instance from water-glass and sulphuric acid. Further, one or more alkali hydroxides may be present, suitably in a molar ratio $SiO_2$:MOH of from 0.5 to 40, preferably from 1 to 20, more preferably of from 1.5 to 5.

A suitable aqueous starting material for use in the present invention comprises compounds which give the following molar composition:

| M$_2$O$_3$ | 0.3 to 1.2 |
|---|---|
| Na$_2$O | 3 to 10 |
| Diamine | 0.5 to 40 |
| SiO$_2$ | 10 to 60 |
| H$_2$O | 500 to 2000 |

where M represents gallium and/or iron(III) and, if present, aluminium.

The composite crystalline silicates may conveniently be prepared by maintaining the starting mixture, usually under autogenous pressure, at an elevated temperature, preferably of from 100-250 °C for 24-190 hours under stirred conditions, until composite crystalline silicate has formed and subsequently separating crystalline silicate from the mother liquor (e.g. by means of filtration or centrifugation), washing the crystalline silicate thus obtained and drying (suitably at a temperature of from 100-200 °C), optionally followed by calcining at a temperature of from 200-600 °C.

The present invention also relates to composite crystalline gallium- and/or iron-containing silicates which may be prepared according to a process as described hereinbefore and the X-ray diffraction pattern of which includes characteristic lines of more than one silicate.

Such silicates can be treated as necessary for the catalytic use to which they are intended, for example, catalytic dewaxing. Thus for example they may be treated to introduced catalytically active metals. They may be transformed from powder form into particulate form by shaping techniques with optional introduction of binder materials. As the crystalline silicates comprise alkali metal ions, these may be replaced by other cations such as hydrogen or ammonium ions. Such methods are known in the art, and are further described in, for example, the afore-mentioned European patent applications Nos. 107875, 100115 and 178699.

The invention therefore further includes catalyst compositions comprising a composite crystalline iron- and/or gallium-containing silicate as described above.

When the composite silicates are employed in dewaxing, the hydrocarbon oils which are to be dewaxed are preferably selected from the group consisting of lubricating oils and transformer oils (in order to reduce their pour point), and kerosenes and gas oils (in order to reduce their freezing point).

The present invention therefore includes a process for the catalytic dewaxing of hydrocarbon oils wherein the catalyst comprises a composite crystalline iron-and/or gallium-containing silicate as described above.

The catalytic dewaxing process according to the present invention may suitably be carried out at a temperature of from 200-500 °C, a hydrogen pressure of from 5-100 bar, a space velocity of from 0.1-5.0 kg.l$^{-1}$.h$^{-1}$ and a hydrogen/oil ratio of from 100-2500 Nl.kg$^{-1}$. The process is preferably carried out at a temperature of from 250-450 °C, a hydrogen pressure of from 10.75 bar, a space velocity of from 0.3-3 kg.l$^{-1}$.h$^{-1}$ and a hydrogen/oil ratio of from 200-2000 Nl.kg$^{-1}$.

The invention will now be further described with reference to the following Examples.

EXAMPLE 1

Preparation of composite crystalline gallium silicate A.

An aqueous alkaline starting mixture was prepared by adding to water the following compounds, water-glass (sodium silicate), gallium nitrate, sulphuric acid and 1,4-diaminobutane ("DAB") in such quantities that the starting mixture had the following molar composition:

25SiO$_2$-0.6Ga$_2$O$_3$-6Na$_2$O-6DAB-1000H$_2$O.

Composite silicate A was prepared by maintaining the starting mixture at 160 °C for 120 hours with stirring in an autoclave under autogenous pressure. After cooling the reaction mixture crystalline gallium silicate was filtered off, washed with water until the pH of the wash water was about 8 and dried at 120 °C for 16 hours. The so obtained composite silicate A had the characteristic X-ray diffraction pattern given in Table A, in which "D-space" represents the interplanar spacing (in Å) calculated from the measured theta (Bragg angle) by using the Bragg equation and "I/I$_{max}$, %" represents the intensity of a peak, expressed as a percentage of the intensity of the main peak.

3

TABLE A

| D-Space | $I/I_{max}$, % |
|---------|----------------|
| 10.91 | 22 |
| 9.81 | 18 |
| 9.25 | 36 |
| 4.34 | 11 |
| 4.24 | 11 |
| 3.96 | 50 |
| 3.90 | 36 |
| 3.84 | 100 |
| 3.81 | 76 |
| 3.75 | 59 |
| 3.71 | 38 |
| 3.64 | 46 |
| 3.52 | 53 |
| 3.45 | 52 |

Chemical analysis of composite silicate A showed that its gallium content was 8.4% by weight. Composite silicate A is a crystalline intergrowth comprising substantially equal amounts of two different crystalline gallium silicates which are further indicated as "silicate 1" and "silicate 2".

EXAMPLE 2

Preparation of composite crystalline gallium silicate B. Composite crystalline silicate B was prepared as described in Example 1, except that the starting mixture had the following molar composition:
$25SiO_2$-$0.6Ga_2O_3$-$4Na_2O$-$3.5DAB$-$1000H_2O$.

The resulting composite silicate B comprised a crystalline intergrowth comprising about 15% of gallium silicate 1 and 85% of gallium silicate 2 and gave the characteristic X-ray diffraction pattern as shown in Table B.

TABLE B

| D-Space | $I/I_{max}$, % |
|---------|----------------|
| 10.89 | 24 |
| 9.80 | 20 |
| 9.23 | 19 |
| 4.34 | 12 |
| 4.23 | 14 |
| 4.05 | 10 |
| 3.95 | 10 |
| 3.91 | 12 |
| 3.84 | 93 |
| 3.81 | 81 |
| 3.74 | 41 |
| 3.71 | 51 |
| 3.64 | 38 |
| 3.52 | 11 |
| 3.46 | 11 |

EXAMPLE 3

Preparation of composite crystalline gallium silicate C. Composite crystalline gallium silicate C was prepared using the method described in Example 1, except that 1,4-diaminobutane was replaced by 1,2-diaminoethane (DAE) and the water-glass was replaced by a silica sol. The starting mixture had the following molar composition:
$25SiO_2-0.4Ga_2O_3-8Na_2O-20DAE-1000H_2O$.

The resulting composite silicate C comprised a crystalline intergrowth comprising about 75% of gallium silicate 1 and 25% of gallium silicate 2 and gave the characteristic X-ray diffraction pattern as shown in Table C.

TABLE C

| D-Space | $I/I_{max}$, % |
|---------|----------------|
| 11.03 | 7 |
| 9.87 | 20 |
| 9.37 | 100 |
| 6.91 | 16 |
| 3.97 | 47 |
| 3.92 | 42 |
| 3.85 | 54 |
| 3.82 | 54 |
| 3.76 | 50 |
| 3.72 | 26 |
| 3.64 | 53 |
| 3.53 | 57 |
| 3.46 | 65 |
| 3.43 | 35 |
| 3.37 | 19 |
| 3.31 | 24 |

EXAMPLE 4

Preparation of composite crystalline iron silicate D. Composite crystalline iron silicate D was prepared as described in Example 1, except that gallium nitrate was replaced by iron(III) nitrate, no sulphuric acid was employed and the starting mixture had the following composition:
$25SiO_2-0.6Fe_2O_3-7.4Na_2O-3.5DAB-1000H_2O$.

The resulting composite iron silicate D was found by chemical analysis to have an iron content of 7.6% by weight. The composite comprised a crystalline inter-growth comprising about 30% of iron silicate 1 and about 70% of iron silicate 2 and gave the characteristic X-ray diffraction pattern as shown in Table D.

TABLE D

| D-Space | $I/I_{max}$, % |
|---------|-----------|
| 10.91 | 22 |
| 9.79 | 17 |
| 9.33 | 34 |
| 4.35 | 11 |
| 4.25 | 15 |
| 4.05 | 15 |
| 3.97 | 28 |
| 3.94 | 21 |
| 3.84 | 100 |
| 3.81 | 70 |
| 3.78 | 25 |
| 3.74 | 34 |
| 3.72 | 44 |
| 3.65 | 30 |
| 3.53 | 30 |
| 3.47 | 27 |

EXAMPLE 5

Preparation of composite crystalline gallium/aluminium silicate E.

A composite crystalline mixed gallium and aluminium silicate E was prepared as described in Example 1, except that a mixture of gallium nitrate and aluminium nitrate was used instead of gallium nitrate alone. The starting mixture had the following composition:
$25SiO_2 \cdot 0.3Ga_2O_3 \cdot 0.3Al_2O_3 \cdot 6Na_2O \cdot 6DAB \cdot 1000H_2O$.

The resulting composite mixed gallium and aluminium silicate comprised a crystalline intergrowth comprising about equal amounts of silicates 1 and 2 and gave the characteristic X-ray diffraction pattern as shown in Table E.

## TABLE E

| D-Space | $I/I_{max}$, % |
|---------|----------------|
| 11.09 | 25 |
| 9.98 | 17 |
| 9.40 | 54 |
| 6.91 | 21 |
| 4.36 | 11 |
| 4.29 | 11 |
| 4.25 | 21 |
| 4.08 | 30 |
| 4.03 | 22 |
| 3.97 | 79 |
| 3.92 | 52 |
| 3.85 | 100 |
| 3.82 | 60 |
| 3.77 | 67 |
| 3.72 | 53 |
| 3.65 | 57 |
| 3.53 | 80 |
| 3.46 | 78 |
| 3.36 | 21 |
| 3.34 | 43 |
| 3.30 | 24 |
| 3.13 | 26 |
| 3.04 | 24 |

## EXAMPLE 6

Dewaxing experiment.

A catalytic dewaxing experiment was carried out in once through operation in a reactor containing a fixed bed of the hydrogen form of the composite silicate B of Example 2, diluted with silicon carbide particles.

A waxy raffinate of Middle East origin, comprising 15% by weight of wax, 232 ppmw sulphur, 12 ppmw nitrogen and having a pour point of +45 °C (according to ASTM D 97), was catalytically dewaxed in the presence of hydrogen under the following operating conditions:

partial hydrogen pressure : 40 bar

space velocity : 1.0 kg feed/l.cat./hour

average reactor temperature: 287 °C

hydrogen feed rate : 500 Nl/kg feed

The liquid product obtained was distilled in a vigreux column. The resulting dewaxed raffinate had a pour point (according to ASTM D 97) of -10 °C. The yield, as a weight percentage based on hydrocarbon feed, was 88%.

## Claims

1. A process of preparing a composite crystalline iron- and/or gallium-containing silicate comprising maintaining an aqueous starting material comprising one or more silicon compounds, one or more iron and/or gallium compounds, optionally one or more aluminium compounds, and a diaminoalkane at an elevated temperature until said composite crystalline silicate has formed and subsequently separating the said silicate from the mother liquor.

2. A process according to claim 1 wherein the diaminoalkane has from 2 to 6 carbon atoms.

3. A process according to claim 2 wherein the diaminoalkane is 1,4-diaminobutane.

4. A process according to claim 1, 2 or 3 wherein the diaminoalkane is employed in a molar ratio $SiO_2$:diamine of from 0.5 to 50 moles $SiO_2$ per mole of diamine.

5. A process according to any one of claims 1 to 4 wherein the gallium and/or iron is employed in a molar ratio SiO 2:$M_2O_3$ (where M is gallium and/or iron and, if present, aluminium) of from 10 to 200 moles $SiO_2$ per mole of $M_2O_3$.

6. A process according to any one of the preceding claims wherein the aqueous starting material comprises compounds which provide the molar composition:

| | |
|---|---|
| $M_2O_3$ | 0.3 to 1.2 (where M is gallium and/or iron and, if present, aluminium) |
| $Na_2O$ | 3 to 10 |
| Diamine | 0.5 to 40 |
| $SiO_2$ | 10 to 60 |
| $H_2O$ | 500 to 2000 |

7. A process according to any one of the preceding claims wherein the starting material is stirred for 24 to 190 hours at a temperature of from 100-250 °C under autogenous pressure.

8. A composite crystalline gallium- and/or iron-containing silicate when prepared by the process of any one of the preceding claims.

9. A composite crystalline gallium- and/or iron-containing silicate having an X-ray powder diffraction pattern which includes characteristic lines of more than one silicate.

10. A catalyst composition comprising a composite crystalline iron- and/or gallium-containing silicate in accordance with any one of claims 8 or 9.

11. Process for the catalytic dewaxing of hydrocarbon oils wherein the catalyst used comprises a composite crystalline iron- and/or gallium-containing silicate in accordance with any one of claims 8 or 9.